# EUROPEAN PATENT APPLICATION

(11) **EP 4 624 840 A1**
(43) Date of publication of application: **01.10.2025**
(21) Application number: 23894027.4
(22) Date of filing: 24.11.2023
(51) Int. Cl.: F25D 23/12

(54) **WATER PATH INTEGRATED STRUCTURE AND REFRIGERATOR HAVING SAID STRUCTURE**

(30) Priority: 25.11.2022 CN 202211492377
(71) Applicant: QINGDAO HAIER REFRIGERATOR CO., LTD., Qingdao, Shandong 266101 (CN); HAIER SMART HOME CO., LTD., Qingdao, Shandong 266101 (CN)
(72) Inventor: YANG, Jun, Qingdao, Shandong 266101 (CN); ZUO, Lihua, Qingdao, Shandong 266101 (CN)
(74) Representative: Winter, Brandl - Partnerschaft mbB
(86) International application number: PCT/CN2023/134065
(87) International publication number: WO 2024/109938

(57) **Abstract**

A waterway integrated structure and a refrigerator having the same are provided. The waterway integrated structure includes a filter, a water valve, and a water reservoir connected in sequence. The water valve includes a water inlet connected to the filter and a water outlet connected to the water reservoir. The water valve further includes a water flow channel and a one-way component, the water flow channel communicating the water inlet with the water outlet, the one-way component disposed within the water flow channel. The water flow channel includes an inlet water passage connected to the water inlet, an outlet water passage connected to the water outlet, and a liquid guide chamber connecting the inlet water passage and the outlet water passage. The inlet water passage and the outlet water passage are located on the same side of the liquid guide chamber. By integrating the one-way component into the water valve, water flow control and backflow prevention are achieved simultaneously, simplifying the assembly steps of the waterway integrated structure.

## Description

### TECHNICAL FIELD

The present application relates to the field of refrigeration devices, and particularly relates to a waterway integrated structure and a refrigerator having the same.

### BACKGROUND

Currently, to facilitate user convenience, many refrigerator products are equipped with a waterway integrated structure inside the refrigerator. Specifically, a filter, a water valve, and a water reservoir are integrated together to allow external water sources to supply water to a dispenser and an ice maker after filtration. The waterway integrated structure also facilitates unified mounting and maintenance. In existing waterway integrated structures, to prevent backflow of water supplied to the refrigerator, a one-way component is installed in the water supply passage, which results in complicated assembly steps of the waterway integrated structure.

### SUMMARY

An object of the present application is to provide a waterway integrated structure that is easy to assemble and a refrigerator having the same.

To achieve one of the above objects, in one embodiment, the present application provides a waterway integrated structure, including a filter, a water valve and a water reservoir which are connected in sequence; wherein the water valve includes a water inlet connected to the filter and a water outlet connected to the water reservoir; the water valve further includes a water flow channel and a one-way component, the water flow channel communicating the water inlet with the water outlet, the one-way component disposed within the water flow channel; the water flow channel includes an inlet water passage connected to the water inlet, an outlet water passage connected to the water outlet, and a liquid guide chamber connecting the inlet water passage and the outlet water passage; the inlet water passage and the outlet water passage are located on the same side of the liquid guide chamber.

In a further improvement of one embodiment of the present application, the one-way component is provided in the inlet water passage and/or the outlet water passage.

In a further improvement of one embodiment of the present application, the inlet water passage includes an inlet pipeline and an inlet duct, the inlet pipeline connected to the water inlet, the inlet duct communicating the inlet pipeline with the liquid guide chamber; the outlet water passage includes an outlet pipeline and an outlet duct, the outlet pipeline connected to the water outlet, the outlet duct communicating the outlet pipeline with the liquid guide chamber; a center axis of the inlet duct is parallel to a center axis of the outlet duct.

In a further improvement of one embodiment of the present application, the inlet duct includes a first tube and a second tube, the first tube connected to the liquid guide chamber, the second tube communicating the first tube with the inlet pipeline; the first tube has a diameter dimension larger than a diameter dimension of the second tube, the one-way component is disposed within the first tube.

In a further improvement of one embodiment of the present application, the water valve includes a valve body forming the water flow channel and a filter element, the filter element abutting against the valve body and located in the liquid guide chamber, one end of the one-way component away from the second tube abuts against the filter element.

In a further improvement of one embodiment of the present application, the one-way component includes a housing matching with the first tube, a movable member cooperating with the housing, and a resilient member abutting between the housing and the movable member; the housing includes a liquid outlet facing the liquid guide chamber and a liquid inlet facing the second tube, the movable member includes a piston matching with the liquid inlet, the resilient member abuts against one end of the piston away from the liquid inlet.

In a further improvement of one embodiment of the present application, the movable member further includes a moving rod, the moving rod connected to the piston and matching with the resilient member; the one-way component further includes a limiting sleeve cooperating with the moving rod and a connecting block, the connecting block connecting the limiting sleeve and the housing, the resilient member abuts against one end of the connecting block and/or the limiting sleeve away from the liquid outlet.

In a further improvement of one embodiment of the present application, the one-way component further includes a guide block disposed on an inner wall of the housing, an inner diameter dimension of the guide block gradually increases from the liquid inlet toward the liquid outlet.

In a further improvement of one embodiment of the present application, the valve body includes a mounting port exposing the liquid guide chamber, the mounting port matching with the filter element. The water valve further includes a cover plate connected to the valve body and covering the mounting port.

In a further improvement of one embodiment of the present application, the water valve further includes a water supply port, the valve body further includes a water supply passage, the water supply passage communicating the water supply port with the liquid guide chamber; the water supply passage is located on the same side of the liquid guide chamber as the inlet water passage and the outlet water passage.

To achieve the above object, the present application further provides a refrigerator, wherein the refrigerator comprises the above waterway integrated structure.

Compared with the prior art, in the embodiments of the present application, by integrating the one-way component into the water valve, water flow control and backflow prevention are achieved simultaneously, simplifying the assembly steps of the waterway integrated structure.

### BRIEF DESCRIPTION OF THE DRAWINGS

Fig. 1 is a perspective view of a waterway integrated structure in a preferred embodiment of the present application;
Fig. 2 is a perspective view of the water valve in Fig. 1;
Fig. 3 is a sectional view taken along line A-A in Fig. 2;
Fig. 4 is a sectional view taken along line B-B in Fig. 2;
Fig. 5 is a perspective view of a sectional view of the one-way component in Fig. 2;
Fig. 6 is an exploded view of a connecting seat in another preferred embodiment of the present application;
Fig. 7 is a perspective view of a sectional view of the connecting seat in Fig. 6;
Fig. 8 is a perspective view of a sectional view of the connecting structure in Fig. 6;
Fig. 9 is an exploded view of a connecting seat in a further preferred embodiment of the present application;
Fig. 10 is a perspective view of a sectional view of the connecting seat in Fig. 9;
Fig. 11 is a perspective view of a sectional view of the connecting structure in Fig. 9;
Fig. 12 is a partial view of Fig. 6.

### DETAILED DESCRIPTION

The following detailed description of the present application will be made with reference to the specific embodiments shown in the drawings. However, these embodiments do not limit the present application, and any structural, methodological, or functional variations made by those skilled in the art based on these embodiments are included within the scope of protection of the present application.

It should be understood that spatial relative position terms such as "upper", "lower", "outer", "inner" used in this document are for the purpose of convenience to describe the relationship between one unit or feature relative to another unit or feature as shown in the drawings. The spatial relative position terms are intended to encompass different orientations of the device in use or operation in addition to the orientations depicted in the figures.

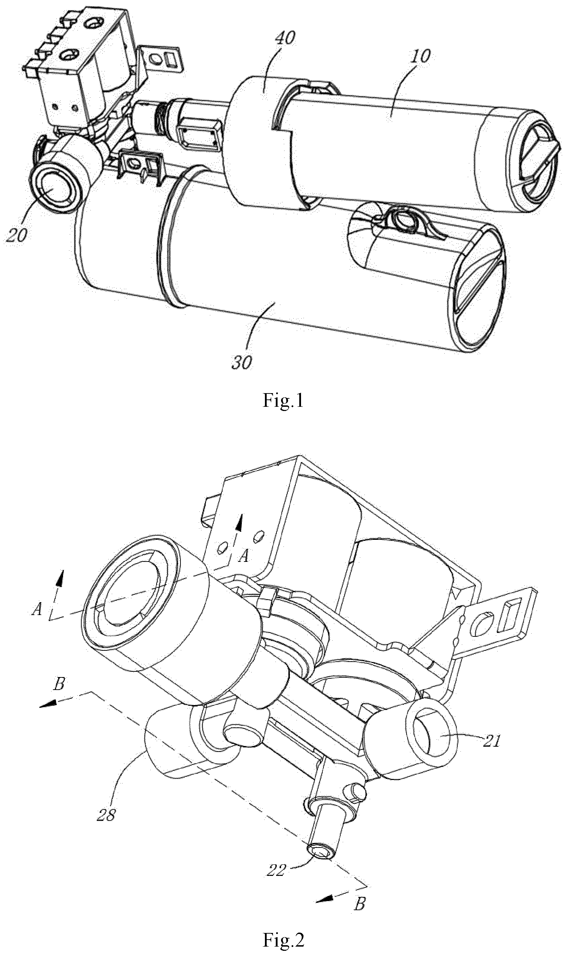

Referring to Figs. 1 to 5, a preferred embodiment of the present application provides a waterway integrated structure, the waterway integrated structure filters external water sources and supplies water to a water dispenser and an ice maker, ensuring safe water use for users.

Specifically, referring to Fig. 1, a waterway integrated structure includes a filter 10, a water valve 20 and a water reservoir 30 connected in sequence. In this embodiment, the filter 10 is in fluid communication with an external water source, and after filtering the water, the filtered water is delivered to the water valve 20 under the water pressure of the external water source, and is regulated by the water valve 20 to be delivered to the water reservoir 30 for user access.

Specifically, referring to Fig. 2, the water valve 20 includes a water inlet 21 connected to the filter 10 and a water outlet 22 connected to the water reservoir 30. In this embodiment, the filtered water from the filter 10 enters the water valve 20 through the water inlet 21 and is delivered to the water reservoir 30 through the water outlet 22.

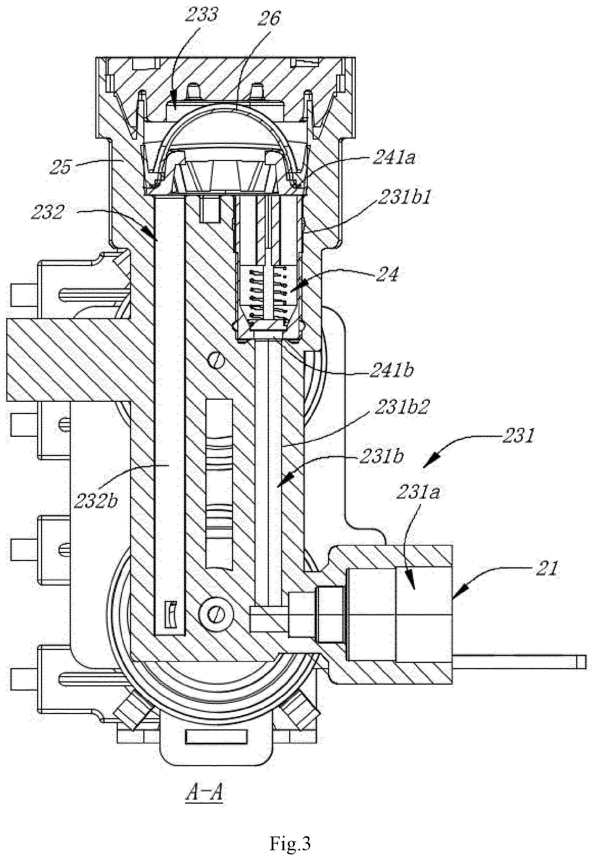

Furthermore, referring to Fig. 3, the water valve 20 further includes a water flow channel and a one-way component 24, the water flow channel communicating the water inlet 21 with the water outlet 22, the one-way component 24 disposed within the water flow channel. In this embodiment, the one-way component 24 conducts water flow in the flow channel in a single direction, that is, water flow entering the flow channel from the water inlet 21 can only flow out from the water outlet 22 and cannot flow out from the water inlet 21, preventing backflow of water entering the water valve 20.

The one-way component 24 is integrated inside the water valve 20, preventing damage to the one-way component 24 during use of the waterway integrated structure and effectively protecting the one-way component 24. The one-way component 24 and the water valve 20 are connected to the refrigerator's water supply passage as a whole, facilitating the assembly of the water supply passage.

By integrating the one-way component 24 into the water valve 20, water flow control and backflow prevention are achieved simultaneously, simplifying the assembly steps of the waterway integrated structure.

Specifically, the water flow channel includes an inlet water passage 231 connected to the water inlet 21, an outlet water passage 232 connected to the water outlet 22, and a liquid guide chamber 233 connecting the inlet water passage 231 and the outlet water passage 232; wherein the inlet water passage 231 and the outlet water passage 232 are located on the same side of the liquid guide chamber 233.

In this embodiment, since the inlet water passage 231 and the outlet water passage 232 are located on the same side of the liquid guide chamber 233, the water flow inside the water valve 20 follows approximately a "U"-shaped flow pattern, that is, water in the inlet water passage 231 flows through the liquid guide chamber 233 and then into the outlet water passage 232, thereby changing the water flow direction in and out of the water valve 20. Compared with a straight-through structure, this not only saves space in the lengthwise direction of the water valve 20 but also reduces the water flow impact force inside the flow channel, thereby reducing the impact force on the one-way component 24.

Furthermore, the one-way component 24 is provided in the inlet water passage 231 and/or the outlet water passage 232. In this embodiment, since water flows smoothly and linearly in the inlet water passage 231 and outlet water passage 232, placing the one-way component 24 in the inlet water passage 231 and/or the outlet water passage 232 ensures normal operation of the one-way component 24 and prevents piston misalignment.

Preferably, the one-way component 24 is disposed in the inlet water passage 231, placing it closer to the external water source, ensuring that the water pressure from the external water source is sufficient to drive the one-way component 24 for unidirectional flow, guaranteeing normal water supply through the one-way component 24.

Specifically, the inlet water passage 231 includes an inlet pipeline 231a and an inlet duct 231b, the inlet pipeline connected to the water inlet 21, inlet duct communicating the inlet pipeline 231a with the liquid guide chamber 233. In this embodiment, the water flow direction in the inlet pipeline 231a forms a certain angle with the water flow direction in the inlet duct 231b, preferably perpendicular, thereby reducing the water flow impact force in the inlet water passage 231 and decreasing the impact force on the one-way component 24.

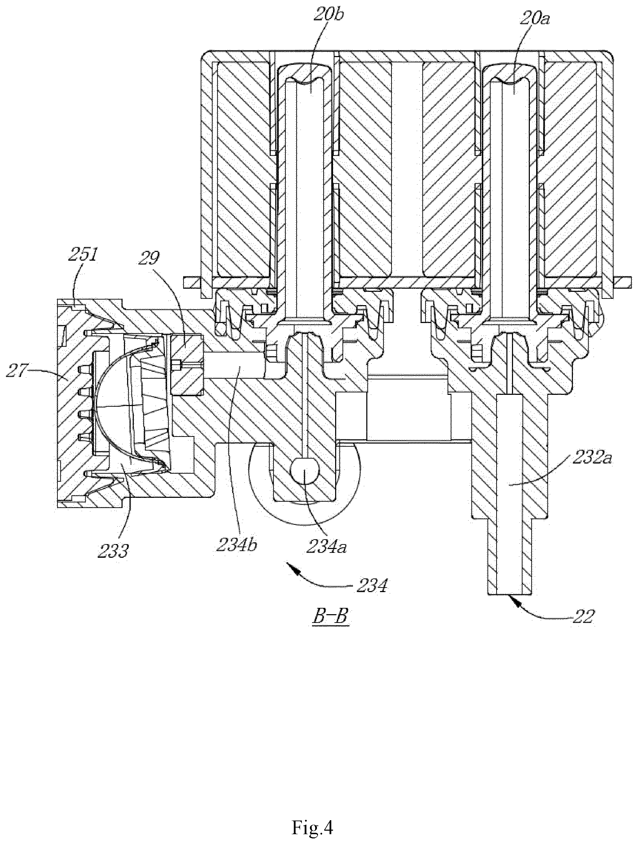

Specifically, referring to Fig. 4, the outlet water passage 232 includes an outlet pipeline 232aand an outlet duct 232b, the outlet pipeline connected to the water outlet 22, the outlet duct communicating the outlet pipeline 232a with the liquid guide chamber 233. In this embodiment, the water flow direction in the outlet pipeline 232a forms a certain angle with the water flow direction in the outlet duct 232b, preferably perpendicular, thereby reducing the water flow impact force in the outlet water passage 232 and decreasing the impact force on the one-way component 24.

Furthermore, the center axis of the inlet duct 231b is parallel to the center axis of the outlet duct 232b. In this embodiment, as shown in Fig. 3, the water flow directions in the inlet duct 231b and outlet duct 232b are opposite and parallel to each other, maximizing space efficiency in both length and width directions of the water valve 20.

Preferably, the one-way component 24 is disposed in the inlet duct 231b. The parallel arrangement of the inlet duct 231b and outlet duct 232b along the length direction of the water valve 20 provides space for installing the elongated one-way component 24, thus fully utilizing the length-wise space of the water valve 20 while saving width-wise space, resulting in a more compact structure.

Specifically, the inlet duct 231b includes a first tube 231b1 and a second tube 231b2, the first tube connected to the liquid guide chamber 233, the second tube communicating the first tube 231b1 with the inlet pipeline 231a; wherein the first tube 231b1 has a diameter dimension larger than a diameter dimension of the second tube 231b2. In this embodiment, the inlet duct 231b includes an elongated tubular structure, and due to the diameter difference between the first tube 231b1 and the second tube 231b2, there exists a pressure difference in the water flow through the inlet duct 231b, with higher water pressure in the second tube 231b2 and lower water pressure in the first tube 231b1.

Furthermore, the one-way component 24 is disposed within the first tube 231b1. In this embodiment, the one-way component 24 is located in the first tube 231b1, with one end at the connection between the first tube 231b1 and the second tube 231b2, creating different water pressures for inflow and outflow through the one-way component 24, thereby accelerating unidirectional flow and preventing backflow.

Specifically, the water valve 20 includes a valve body 25 forming the water flow channel and a filter element 26, the filter element abutting against the valve body 25 and located in the liquid guide chamber 233. In this embodiment, the filter element 26 is snap-fitted to the valve body and cannot move within the liquid guide chamber 233. The filter element 26 located in the liquid guide chamber 233, at the water flow turning point, can filter the water flowing through the liquid guide chamber 233.

Furthermore, one end of the one-way component 24 away from the second tube 231b2 abuts against the filter element 26. In this embodiment, after the one-way component 24 is matched and inserted into the first tube 231b1, it cannot produce radial displacement along the first tube 231b1. The one-way component 24 abuts against the second tube 231b2 and the filter element 26 along the axis of the first tube 231b1, preventing axial displacement along the first tube 231b1, ensuring normal operation of the one-way component 24, and facilitating maintenance and replacement of the one-way component 24.

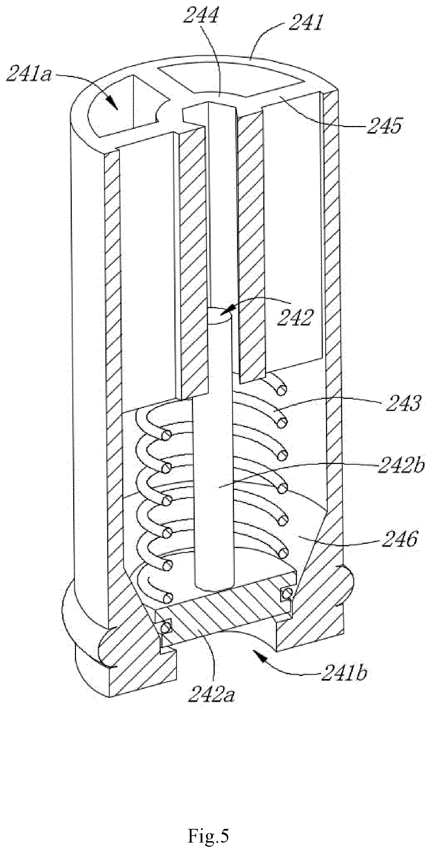

Specifically, referring to Fig. 5, the one-way component 24 includes a housing 241 matching with the first tube 231b1, a movable member 242 cooperating with the housing 241, and a resilient member 243 abutting between the housing 241 and the movable member 242. In this embodiment, the housing 241 is configured as an elongated tubular structure with an outer diameter dimension matching the inner diameter dimension of the first tube 231b1.

The housing 241 includes a liquid outlet 241a facing the liquid guide chamber 233 and a liquid inlet 241b facing the second tube 231b2. In this embodiment, orienting the liquid outlet 241a of the one-way component 24 toward the liquid guide chamber 233 and the liquid inlet 241b toward the second tube 231b2 allows water with higher pressure from the second tube 231b2 to more easily enter the one-way component 24, while water with lower pressure in the first tube 231b1 is less likely to enter, achieving unidirectional flow.

Specifically, when the external water source is disconnected, the movable member 242 receives elastic force from the resilient member 243, sealing the liquid inlet 241b to prevent backflow. When the external water source is connected, the pressure of the external water source causes the resilient member 243 to deform, allowing the movable member 242 to move and unseal the liquid inlet 241b, achieving unidirectional flow.

Specifically, the movable member 242 includes a piston 242a matching with the liquid inlet 241b, and the resilient member 243 abuts against one end of the piston 242a away from the liquid inlet 241b. In this embodiment, the movable member 242 uses the piston 242a to seal the liquid inlet 241b. The resilient member 243 abuts against the piston 242a along the axis of the inlet duct 231b, with an elastic deformation force of the resilient member opposing the water flow direction in the inlet duct 231b, enabling the piston 242a to seal the liquid inlet 241b more stably.

Specifically, the movable member 242 further includes a moving rod 242b, the moving rod connected to the piston 242a and matching with the resilient member 243; the one-way component 24 further includes a limiting sleeve 244 cooperating with the moving rod 242b and a connecting block 245, the connecting block connecting the limiting sleeve 244 and the housing 241. In this embodiment, the moving rod 242b can move axially within the limiting sleeve 244 along the inlet duct 231b, while the limiting sleeve 244 restricts radial movement of the moving rod 242b. The one-way component 24 includes multiple connecting blocks 245 arranged circumferentially around the axis of the inlet duct 231b, with the liquid outlet 241a formed between the housing 241 and adjacent connecting blocks 245, creating multiple liquid outlets 241a of equal size, allowing water to flow out of the one-way component 24 more stably and uniformly.

Furthermore, the resilient member 243 abuts against one end of the connecting block 245 and/or the limiting sleeve 244 away from the liquid outlet 241a. In this embodiment, the resilient member 243 is sleeved over the moving rod 242b, with both ends abutting against the piston 242a and the connecting block 245 and/or limiting sleeve 244, respectively; preventing the resilient member 243 from detaching during deformation.

Furthermore, the one-way component 24 further includes a guide block 246 disposed on an inner wall of the housing 241, where the inner diameter dimension of the guide block 246 gradually increases from the liquid inlet 241b toward the liquid outlet 241a. In this embodiment, as shown in Fig. 5, the guide block 246 has a conical cross-section, which guides the piston 242a when the piston moves toward the liquid inlet 241b, ensuring smooth sealing of the liquid inlet 241b and preventing backflow in the one-way component 24.

Furthermore, the valve body 25 includes a mounting port 251 exposing the liquid guide chamber 233, the mounting port matching with the filter element 26. The water valve 20 further includes a cover plate 27 connected to the valve body 25 and covering the mounting port 251. In this embodiment, the mounting port 251 facilitates installation and replacement of the filter element 26 and one-way component 24. The cover plate 27 is adhesively fixed to the valve body 25, ensuring the sealing performance and strength of the water flow channel. The cover plate 27 abuts against the filter element 26, preventing detachment of the filter element 26 and one-way component 24, enhancing their installation strength.

Furthermore, the water valve 20 further includes a water supply port 28. In this embodiment, the water valve 20 is preferably configured as a one-inlet-two-outlet valve, with the water supply port 28 preferably supplying water to an ice maker.

Furthermore, the valve body 25 further includes a water supply passage 234, the water supply passage communicating the water supply port 28 with the liquid guide chamber 233, where the water supply passage 234 is located on the same side of the liquid guide chamber 233 as the inlet water passage 231 and outlet water passage 232. In this embodiment, similarly, arranging the water supply passage 234, inlet water passage 231, and outlet water passage 232 all on the same side of the liquid guide chamber 233 enables redirection of water flow from the inlet water passage 231 to the water supply passage 234. Compared to a straight-through structure, this both saves space in the length direction of the water valve 20 and reduces water flow impact force within the flow channel, thereby decreasing the impact force on the one-way component 24.

Specifically, the water supply passage 234 includes a water supply pipeline 234aand a water supply duct 234b, the water supply pipeline connected to the water supply port 28, the water supply duct communicating the water supply pipeline 234a with the liquid guide chamber 233, where the center axis of the water supply duct 234b is parallel to the center axis of the inlet duct 231b, rationally arranging the waterways inside the water valve 20 for a more compact internal structure, thereby saving space occupied by the water valve 20.

Furthermore, a pressure stabilizing member 29 is arranged in the water supply duct 234b. The pressure stabilizing member 29 is made of elastic material and has a through-hole smaller than the water supply duct 234b, ensuring stable water pressure supplied to the ice maker.

Furthermore, the water valve 20 also includes a first switch member 20a and a second switch member 20b connected to the valve body 25, where the first switch member 20a is arranged between the outlet duct 232b and outlet pipeline 232a, and the second switch member 20b is arranged between the water supply duct 234b and water supply pipeline 234a. The first switch member 20a and second switch member 20b are configured as electromagnetic switches, controlling the flow through the outlet water passage 232 and water supply passage 234.

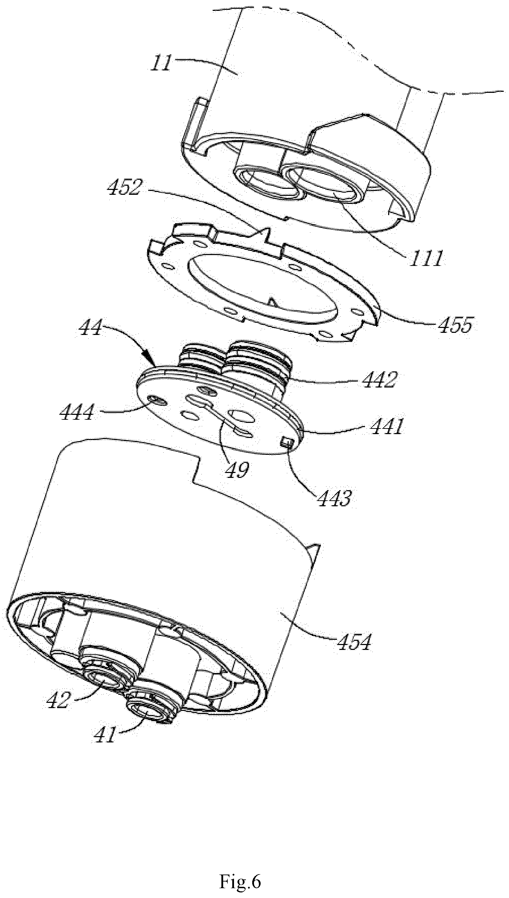

Referring to Figs. 6 to 12, another preferred embodiment of the present application provides a waterway integrated structure that adds a connecting seat 40 based on the above embodiment, facilitating filter replacement while ensuring continued water supply to the refrigerator during filter replacement. The same reference numbers in this embodiment represent the same elements with similar functions and will not be repeated.

Specifically, referring to Fig. 1, a waterway integrated structure includes a filter 10 and a connecting seat 40 detachably connected to the filter 10. In this embodiment, the filter 10 connects to the water valve 20 via the connecting seat 40.

Specifically, referring to Fig. 6, the connecting seat 40 includes an input connecting head 41 and an output connecting head 42, where the input connecting head 41 connects to the external water source. In this embodiment, the input connecting head 41 connects to external water source, and the output connecting head 42 connects to the water valve 20, allowing filtered water from the external water source to be delivered to the water valve 20 and then to the water reservoir 30 or ice maker.

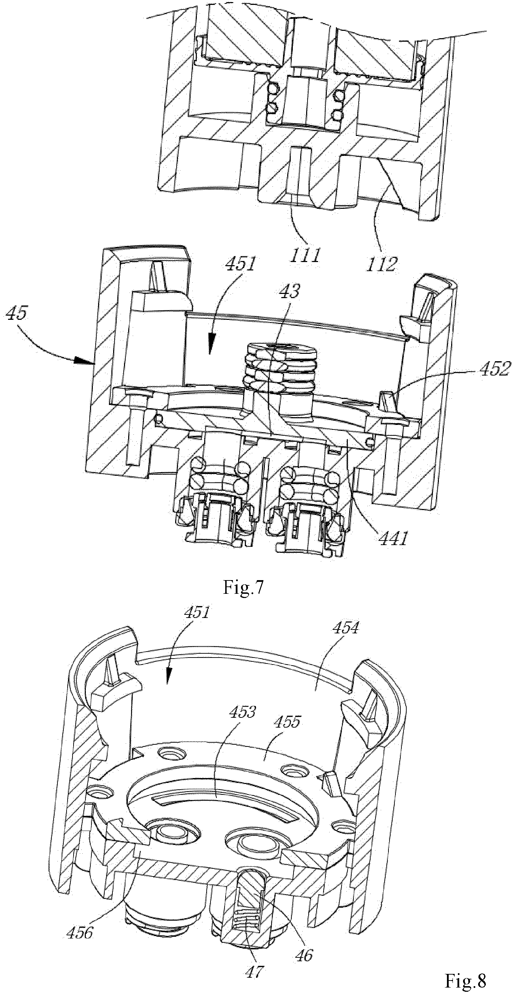

Furthermore, referring to Fig. 7, the connecting seat 40 forms a flow channel 43 and includes a connector member 44 connecting with the filter 10 and a connecting structure 45, the connecting structure connecting the two connecting heads and cooperating with the connector member 44. In this embodiment, the connector member 44 connects to the inlet and outlet of the filter 10. The connecting structure 45 is configured to secure the filter 10, and relative movement can occur between the connector member 44 and connecting structure 45. The two connecting heads refer to the input connecting head 41 and output connecting head 42.

Specifically, the connector member 44 includes a first state and a second state, in the first state, the connector member 44 connects the two connecting heads with the filter 10; in the second state, the connector member 44 disconnects the two connecting heads from the filter 10. In this embodiment, in the first state, the connector member 44 connects the input connecting head 41 to the filter 10 inlet and the output connecting head 42 to the filter 10 outlet. In the second state, the input connecting head 41 disconnects from the filter 10 inlet, and the output connecting head 42 disconnects from the filter 10 outlet.

Furthermore, when the flow channel 43 moves with the connector member 44 to the second state, the flow channel 43 connects the two connecting heads. In this embodiment, as relative movement occurs between the connector member 44 and connecting structure 45, in the second state, the flow channel 43 connects the input connecting head 41 and output connecting head 42, allowing normal water supply to the water reservoir 30 or ice maker. In the first state, the flow channel 43 disconnects from the input connecting head 41 and output connecting head 42, not affecting the connection between the input connecting head 41 and the filter 10, and between the output connecting head 42 and the filter 10.

The flow channel 43 is formed between the connector member 44 and connecting structure 45, ensuring the waterway integrated structure can continue supplying water to the refrigerator during filter replacement, meeting users' water needs.

Specifically, the connector member 44 includes a mating portion 441 that rotatably cooperates with the connecting structure 45 and a connector portion 442 connected to the mating portion 441. In this embodiment, the connector member 44 is rotatably mounted on the connecting structure 45 through the mating portion 441, achieving state conversion between the first and second states through rotational movement of the connector member 44, which is convenient to operate. Moreover, compared to parallel movement, the rotational state conversion method of the connector member 44 saves space occupied by the connecting seat 40.

Of course, in some embodiments, the connector member 44 can also switch states through parallel movement.

Furthermore, in the first state, the connector portion 442 connects the filter 10 with the two connecting heads. In this embodiment, the connector member 44 includes two connector portions 442 for connecting with the two connecting heads. In the first state, the two connector portions 442 connect the input connecting head 41 to the filter 10 inlet and the output connecting head 42 to the filter 10 outlet.

Specifically, the input connecting head 41 and output connecting head 42 are located on the same side of the connector member 44. In this embodiment, placing the input connecting head 41 and output connecting head 42 on the same side of the connector member 44 saves axial space occupied by the connecting seat 40. The center axis of the input connecting head 41 is parallel to the center axis of the output connecting head 42.

Furthermore, the rotation axis of the mating portion 441 is parallel to the center axes of the two connecting heads. In this embodiment, when the mating portion 441 rotates around its rotation axis to switch states, the mating portion 441 is preferably configured as a circular structure, thus the rotation axis of the mating portion 441 is preferably configured as the center axis of the mating portion. With the rotation axis of the mating portion 441 parallel to the center axes of the input connecting head 41 and output connecting head 42, the space occupied by the connector member 44 in the connecting structure 45 remains constant during rotation.

Of course, in some embodiments, the rotation axis of the connector member 44 can also be perpendicular to the center axes of the input connecting head 41 and output connecting head 42.

Specifically, the filter 10 includes a housing 11 forming a receiving cavity. In this embodiment, a filter element is installed inside the receiving cavity.

Furthermore, the housing 11 connects with the connector portion 442 along the center axis of the mating portion 441 and rotatably cooperates with the connecting structure 45 around the center axis of the mating portion 441. In this embodiment, the housing 11 connects with the connecting structure 45 along the axial direction of the mating portion 441, with threaded engagement between the housing 11 and connecting structure 45, limiting the housing 11 on the connecting structure 45 after rotational connection.

Furthermore, the center axis of the connector portion 442 is parallel to the center axes of the two connecting heads. In this embodiment, the rotation axis of the housing 11 is parallel to the rotation axis of the mating portion 441. This enables the input connecting head 41 and the output connecting head 42 to be disconnected from the filter 10 while the filter 10 is removed, and enables the input connector 41 and the output connector 42 to be connected to the flow-conducting channel 43, preventing leakage in the waterway integrated structure. It also enables the input connecting head 41 and the output connecting head 42to be disconnected from the flow channel 43 while the filter 10 is installed, and enables the input connector 41 and the output connector 42 to be connected to the filter 10, ensuring normal flow between the filter 10, external water source, and water valve 20, avoiding secondary operations by users.

Of course, in some embodiments, the housing 11 can also be fixed to the connecting structure 15 through plug-in connection.

Furthermore, the connecting structure 45 includes a connecting groove 451 matching with the housing 11 and an ejector block 452 disposed in the connecting groove 451. The housing 11 includes a docking portion 111 matching with the connector portion 442 and an ejection portion 112 matching with the ejector block 452, both the connector portion 442 and ejector block 452 protrude into the connecting groove 451 along the center axis of the connector portion 442.

In this embodiment, the ejector block 452 and ejection portion 112 form cooperating inclined surface structures. During rotational connection between the housing 11 and connecting structure 45, the cooperating ejector block 452 and ejection portion 112 provide rotational guidance. During rotational disassembly, the cooperating ejector block 452 and ejection portion 112 facilitate the housing 11 disengaging from the connecting groove 451, making connection and disassembly between the housing 11 and connecting structure 45 more convenient.

Furthermore, referring to Fig. 8, the connecting seat 40 also includes a rotation positioning structure that limits the cooperation between the connecting structure 45 and connector member 44. The rotation positioning structure includes a rotation block 443 arranged on either the connecting structure 45 or connector member 44, and a rotation groove 453 arranged on the other one, where the center axis of the rotation groove 453 is coaxial with the rotation axis of the mating portion 441.

In this embodiment, the rotation groove 453 is preferably arranged on the connecting structure 45 and the rotation block 443 on the connector member 44. The rotation positioning structure limits the rotational travel of the mating portion 441, preventing excessive rotation between the connector member 44 and connecting structure 45, thus avoiding user misoperation.

Specifically, the connecting structure 45 includes a connecting member 454 forming the connecting groove 451, a limiting member 455 connected to the connecting member 454, and a limiting groove 456 formed between the connecting member 454 and limiting member 455, where at least part of the mating portion 441 protrudes into the limiting groove 456.

In this embodiment, the mating portion 441 is provided radially protruding on the rear side of the limiting groove 456, the mating portion 441 cannot produce axial or radial displacement. The rotation block 443 is preferably provided on the connector member and the rotation groove 453 is provided on the connecting member 454.

Referring to Figs. 6 to 8, the present application provides one embodiment of the connecting seat 40.

Specifically, the two connecting heads are connected to the connecting member 454. In this embodiment, as shown in Fig. 6, the input connecting head 41 and output connecting head 42 are integrally formed with the connecting member 454 and located on the same side, reducing manufacturing costs of the connecting seat 20.

Specifically, the limiting member 455 is located inside the connecting groove 451, and the connector member 44 further includes a flow groove 49 arranged at the end of the mating portion 441 away from the connector portion 442, where the flow channel 43 is formed within the flow groove 49. In this embodiment, the limiting member 455 is fixedly connected to the connecting member 454 and located inside the connecting groove 451. The flow channel 43 is formed within the flow groove 49 arranged on the connector member 44, reducing manufacturing costs of the connecting seat 20.

Furthermore, referring to Figs. 6 and 8, the connecting seat 40 also includes a movable block 46 cooperating with the connecting member 454 and a resilient member 47 abutting between the movable block 46 and connecting member 454. The connector member 44 includes a positioning groove 444 matching with the movable block 46, and the resilient member 47 abuts against the movable block 46 along the center axes of the two connecting heads.

In this embodiment, the connector member 44 preferably includes two positioning grooves 444. When the connector member is in the first and/or second state, the movable block 46 abuts within the positioning groove 444 under the action of the resilient member 47, indicating to users that rotation is complete.

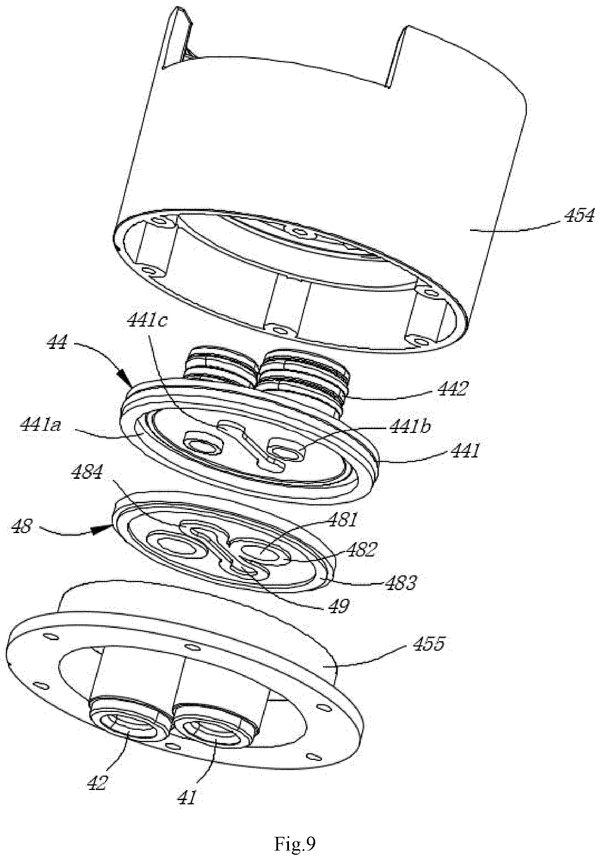

Referring to Figs. 9 to 12, the present application provides another embodiment of the connecting seat 40. The same reference numbers in this embodiment represent the same elements with similar functions and will not be repeated.

Specifically, referring to Fig. 9, the two connecting heads are connected to the limiting member 455. In this embodiment, the input connecting head 41 and output connecting head 42 are integrally formed with the limiting member 455 and located on the same side, reducing manufacturing costs of the connecting seat 20.

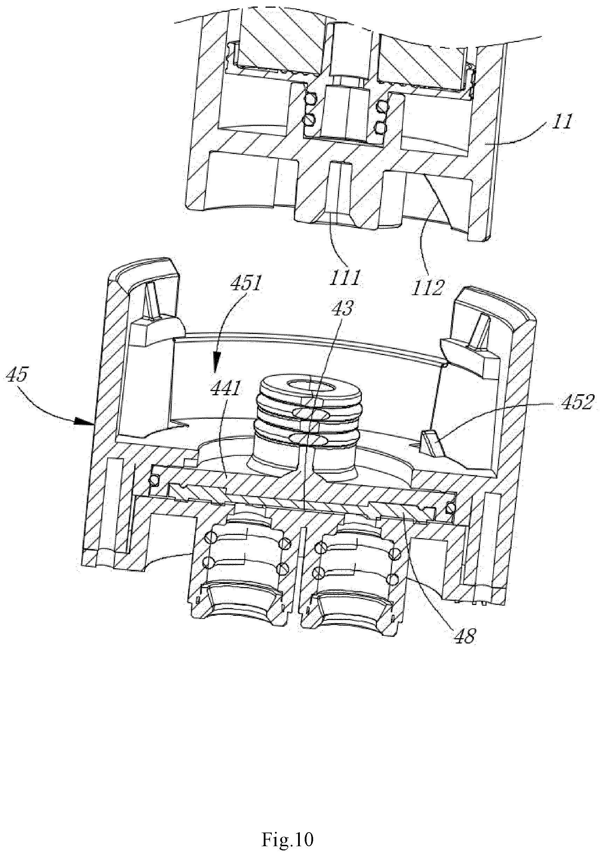

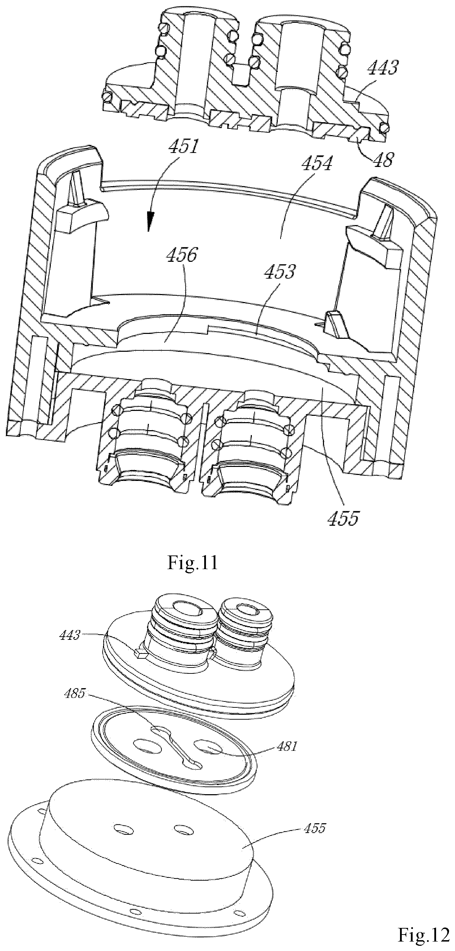

Furthermore, referring to Figs. 10 and 11, the connecting seat 40 also includes a sealing member 48 cooperating with the connector member 44 and abutting against the limiting member 455, and a flow groove 49 arranged at the end of the sealing member 48 away from the connector portion 442, where the flow channel 43 is formed within the flow groove 49.

In this embodiment, the sealing member 48 is fixedly connected to the connector member 44 and moves together with the connector member 44. The sealing member 48 improves the sealing performance between the connector member 44 and the input connecting head 41 and output connecting head 42. The flow channel 43 is formed within the flow groove 49 arranged on the sealing member 48, improving the sealing performance of the connecting seat 20.

Furthermore, referring to Fig. 8, the connecting seat 40 includes a connector member 44 connecting with the filter 10 and a sealing member 48 arranged between the connector member 44 and the two connecting heads. In this embodiment, the sealing member 48 improves the sealing performance between the connector member 44 and the input connecting head 41 and output connecting head 42.

Furthermore, referring to Fig. 10, the connection between the two connecting heads and the connector member 44 switches between connected and disconnected states based on the movement of the sealing member 48. In the disconnected state, the sealing member 48 covers the two connecting heads. In this embodiment, in the connected state, both input connecting head 41 and output connecting head 42 are connected to the connector member 44. In the disconnected state, the sealing member 48 covers the input connecting head 41 and output connecting head 42, disconnecting the input connecting head 41 and output connecting head 42 from the connector member 44.

Through the movement of the sealing member 48 between the connector member 44 and the two connecting heads, the connection switches between connected and disconnected states. In the disconnected state, the sealing member 48 can seal the two connecting heads, preventing water leakage and eliminating the need for users to manually close or open the water source, simplifying the filter replacement process and improving user experience.

Furthermore, referring to Fig. 11, the connecting seat 40 also includes a connecting structure 45 connecting the two connecting heads and cooperating with the connector member 44. The sealing member 48 includes two connecting holes 481 matching with the connector member 44. When the sealing member 48 moves with the connector member 44 to the connected state, the two connecting holes 481 respectively connect to the two connecting heads.

In this embodiment, the connector member 44 is movably arranged on the connecting structure 45, and the sealing member 48 can move together with the connector member 44, facilitating both filter 10 removal and sealing of the input connecting head 41 and output connecting head 42, automatically connecting the filter 10 with the input connecting head 41 and output connecting head 42 during the installation of the filter 10.

Furthermore, the connector member 44 includes a mating portion 441 rotatably cooperating with the connecting structure 45 and a connector portion 442 connected to the mating portion 441. A flow channel 43 is formed on the sealing member 48. In the disconnected state, the flow channel 43 connects the two connecting heads.

In this embodiment, after removing the filter 10, the flow channel 43 on the sealing member 48 can connect the input connecting head 41 and output connecting head 42, allowing the waterway integrated structure to continue supplying water to the refrigerator, achieving uninterrupted water supply and meeting users' water needs.

Furthermore, the mating portion 441 includes a mounting groove 441a matching with the sealing member 48 and a positioning tube 441b protruding into the mounting groove 441a and communicating with the connector portion 442. In this embodiment, the mating portion 441 preferably includes two positioning tubes 441b to connect with the two connector portions 442.

Specifically, the sealing member 48 is fixed in the mounting groove 441a, and at least part of the positioning tube 441b is exposed in the connecting hole 481. In this embodiment, installing the sealing member 48 in the mounting groove 441a prevents radial displacement between the sealing member 48 and mating portion 441. The positioning tube 441b extending into the connecting hole 481 enables the connector member 44 to more securely drive the sealing member 48 to rotate. The sealing member 48 is fixedly connected to the connector member 44, ensuring it rotates firmly with the connector member 44.

Furthermore, referring to Fig. 12, the connecting structure 45 includes a limiting member 455 abutting against the sealing member 48. In this embodiment, the end of the limiting member 455 facing the sealing member 48 includes a planar structure.

Specifically, referring to Fig. 9, the sealing member 48 includes a first sealing protrusion 482 abutting against the limiting member 488 and matching with the connecting hole 481, and a second sealing protrusion 483 abutting against the limiting member 488 and surrounding the outside of the first sealing protrusion 482. The flow channel 43 is located between the first sealing protrusion 482 and second sealing protrusion 483.

In this embodiment, the first sealing protrusion 482 and second sealing protrusion 483 protrude toward the limiting member 455 to abut against the planar structure of the limiting member 455, improving sealing performance between them. The first sealing protrusion 482 surrounds the outer edge of the connecting hole 481, while the second sealing protrusion 483 surrounds the outer edge of the sealing member 48. The first sealing protrusion 482 prevents water from between the mating portion 441 and sealing member 48 into the connecting hole 481, while the second sealing protrusion 483 prevents leakage between the mating portion 441 and sealing member 48 to the outside of the connecting structure 45. Thus, in the disconnected state, the space between the first sealing protrusion 482 and second sealing protrusion 483 can connect the input connecting head 41 and output connecting head 42.

Furthermore, the sealing member 48 also includes a third sealing protrusion 484 abutting against the limiting member 455 and located inside the second sealing protrusion 483. The third sealing protrusion 484 is spaced apart from the first sealing protrusion 482, and the flow channel 43 is formed on the third sealing protrusion 484.

In this embodiment, in the disconnected state, the third sealing protrusion 484 prevents water leakage from the flow channel 43, the first sealing protrusion 482 prevents water from entering the connecting hole 481, and the second sealing protrusion 483 prevents leakage between the mating portion 441 and sealing member 48 to the outside of the connecting structure 45. In the connected state, the first sealing protrusion 482 prevents water from entering the connecting hole 481, and the second sealing protrusion 483 prevents leakage between the mating portion 441 and sealing member 48 to the outside of the connecting structure 45, achieving multiple sealing effects and improving sealing performance.

Specifically, as shown in Fig. 9, the flow channel 43 is formed on the third sealing protrusion 484. The flow channel 34 includes two connecting chambers corresponding to the two connecting heads and a communicating chamber connecting the two connecting chambers. The flow groove 49 is arranged on the third sealing protrusion 484, with the flow channel 43 formed within the flow groove 49. The flow groove 49 is separated from the connecting hole 481 by the first sealing protrusion 482 and third sealing protrusion 484.

Furthermore, referring to Fig. 12, the mating portion 441 also includes a positioning protrusion 441c protruding into the mounting groove 441a and matching with the flow channel 43. The sealing member 48 includes a positioning recess 485 matching with the positioning protrusion 441c on the end facing the mating portion 441. The positioning recess 485 and flow channel 43 are symmetrically arranged on both sides of the sealing member 48.

In this embodiment, the positioning protrusion 441c and flow groove 49 have the same shape. When the positioning protrusion 441c extends into the positioning recess 485, it provides structural support to the positioning recess 485 forming the flow channel 43, thereby improving the pressure-bearing strength of the flow channel 43.

Furthermore, referring to Fig. 10, the filter 10 includes a housing 11 forming a receiving cavity. The connecting structure 45 includes a connecting groove 451 matching with the housing 11 and an ejector block 452 arranged in the connecting groove 451. The housing 11 includes a docking portion 111 matching with the connector portion 442 and an ejection portion 112 matching with the ejector block 452. Both the connector portion 442 and ejector block 452 protrude into the connecting groove 451 along the center axis of the connector portion 442.

In this embodiment, the ejector block 452 and ejection portion 112 form cooperating inclined surface structures. During rotational connection between the housing 11 and connecting structure 45, the ejector block 452 and ejection portion 112 provide rotational guidance. During rotational disassembly, the ejector block 452 and ejection portion 112 facilitate the housing 11 disengaging from the connecting groove 451, making connection and disassembly more convenient.

Furthermore, referring to Fig. 11, the connecting seat 40 includes a rotation positioning structure that limits the cooperation between the connecting structure 45 and connector member 44. The rotation positioning structure includes a rotation block 443 arranged on either the connecting structure 45 or connector member 44, and a rotation groove 453 arranged on the other one, where the center axis of the rotation groove 453 is coaxial with the rotation axis of the mating portion 441.

In this embodiment, the rotation groove 453 is preferably arranged on the connecting structure 45 and the rotation block 443 on the connector member 44. The rotation positioning structure limits the rotational travel of the mating portion 441, preventing excessive rotation and user misoperation. The rotation block 443 is preferably arranged on the connector member and the rotation groove 453 on the connecting member 454.

According to another aspect of the present application, a refrigerator is also provided, wherein the refrigerator is provided with the waterway integrated structure according to the present application.

Specifically, the waterway integrated structure is preferably arranged in the refrigeration compartment, preventing contamination of the water filtration device during use while accelerating the cooling of purified water.

It should be understood that although this specification describes the invention according to embodiments, not every embodiment contains only one independent technical solution. This manner of description in the specification is merely for clarity. Those skilled in the art should consider the specification as a whole, and the technical solutions in various embodiments can also be appropriately combined to form other embodiments that those skilled in the art can understand.

The series of detailed descriptions listed above are merely specific explanations of feasible embodiments of the present application and are not intended to limit its scope of protection. Any equivalent implementation or modification that does not depart from the technical spirit of the present application should be included within its scope of protection.

## Claims

1. A waterway integrated structure, comprising a filter, a water valve and a water reservoir which are connected in sequence, wherein the water valve comprises a water inlet connected to the filter and a water outlet connected to the water reservoir ,
**characterized in that** the water valve further comprises a water flow channel and a one-way component, the water flow channel communicating the water inlet with the water outlet, the one-way component disposed within the water flow channel;
the water flow channel comprises an inlet water passage connected to the water inlet, an outlet water passage connected to the water outlet, and a liquid guide chamber connecting the inlet water passage and the outlet water passage ;
the inlet water passage and the outlet water passage are located on the same side of the liquid guide chamber.

2. The waterway integrated structure according to claim 1, **characterized in that** the one-way component is provided in the inlet water passage and/or the outlet water passage .

3. The waterway integrated structure according to claim 1, **characterized in that** the inlet water passage comprises an inlet pipeline and an inlet duct, the inlet pipeline connected to the water inlet and the inlet duct communicating the inlet pipeline with the liquid guide chamber;
the outlet water passage comprises an outlet pipeline and an outlet duct, the outlet pipeline is connected to the water outlet, the outlet duct communicating the outlet pipeline with the liquid guide chamber,
a center axis of the inlet duct is parallel to a center axis of the outlet duct .

4. The waterway integrated structure according to claim 3, **characterized in that** the inlet duct comprises a first tube and a second tube, the first tube connected to the liquid guide chamber, the second tube communicating the first tube with the inlet pipeline ;
the first tube has a diameter dimension larger than a diameter dimension of the second tube, the one-way component is disposed within the first tube .

5. The waterway integrated structure according to claim 4, **characterized in that** the water valve comprises a valve body forming the water flow channel and a filter element, the filter element abutting against the valve body and located in the liquid guide chamber, one end of the one-way component away from the second tube abuts against the filter element .

6. The waterway integrated structure according to claim 4, **characterized in that** the one-way component comprises a housing matching with the first tube a movable member cooperating with the housing, and a resilient member abutting between the housing and the movable member;
the housing comprises a liquid outlet facing the liquid guide chamber and a liquid inlet facing the second tube ;
the movable member comprises a piston matching with the liquid inlet the resilient member abuts against one end of the piston away from the liquid inlet .

7. The waterway integrated structure according to claim 6, **characterized in that** the movable member further comprises a moving rod, the moving rod connected to the piston and matching with the resilient member ;
the one-way component further comprises a limiting sleeve cooperating with the moving rod and a connecting block, the connecting block connecting the limiting sleeve and the housing, the resilient member abuts against one end of the connecting block and/or the limiting sleeve away from the liquid outlet .

8. The waterway integrated structure according to claim 7, **characterized in that** the one-way component further comprises a guide block disposed on an inner wall of the housing,an inner diameter dimension of the guide block gradually increases from the liquid inlet toward the liquid outlet .

9. The waterway integrated structure according to claim 5, **characterized in that** the valve body comprises a mounting port exposing the liquid guide chamber, the mounting port matching with the filter element, the water valve further comprises a cover plate connected to the valve body and covering the mounting port .

10. The waterway integrated structure according to claim 1, **characterized in that** the water valve further comprises a water supply port, the valve body further comprises a water supply passage, the water supply passage communicating the water supply port with the liquid guide chamber, the water supply passage is located on the same side of the liquid guide chamber as the inlet water passage and the outlet water passage .

11. A refrigerator, **characterized in that** the refrigerator comprises the waterway integrated structure according to any one of claims 1 to 10.
